Europäisches Patentamt

European Patent Office

Office européen des brevets

(11) Publication number: **0 101 417**
**A2**

(12) # EUROPEAN PATENT APPLICATION

(21) Application number: **83830153.9**

(22) Date of filing: **25.07.83**

(51) Int. Cl.³: **A 47 J 43/25**

(30) Priority: **02.08.82 IT 2269482**

(43) Date of publication of application:
**22.02.84 Bulletin 84/8**

(84) Designated Contracting States:
**AT BE CH DE FR GB LI**

(71) Applicant: **GEMINI S.r.l.**
**Via Repubblica 49**
**I-28026 Omegna (Novara)(IT)**

(72) Inventor: **Gemelli, Carlo**
**Via Privata Villa Ada 16**
**I-28026 Omegna (Novara)(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

(54) A grater structure for household applications.

(57) This invention relates to a grater structure for household applications, which is specially engineered to give full assurance of hygienic and safe conditions in any situations.

This grater includes, in a manner known per se, a shaped plate (2) having a substantially rectangular outline and being perforated with a plurality of throughgoing holes (3).

The shaped plate (2) has a working face (2a) wherefrom preferably frusto-conical and jagged annular protuberances (4) stand out and border through-going holes (3).

Between annular protuberances (4), the shaped plate (2) has substantially smooth lands even at its working face (2a).

In a manner known per se, a means of positioning and supporting the shaped plate (2) is provided which comprises, in this specific case, a frame (5) pivoted, through pins (6), to the shaped plate (2) and a handle (7) formed at the top end of the plate (2).

The pins (6) are located adjacent the handle (7) to allow the grater to be placed in a tilted attitude with the handle raised.

The shaped plate (2) is associated with a smooth plate (8) having an edge outline which is similar to that of the cited shaped plate.

Fig. 1

0101417

This invention relates to a grater structure for household application, which is specially designed to give in any situations the utmost assurance of hygienic and safe conditions.

As is known, graters for household application are relatively simple, and formed in practice by two elements: a roughened perforated body, and a small frame for positioning said body and being hingedly connected thereto.

The construction of said roughened body is virtually universal.

The latter is defined by a shaped plate from which there stand out jagged annular protuberances bordering throughgoing holes, the grated material being discharged through said holes.

Such a structure has the virtue of being simple, but is not devoid of some significant disadvantages not yet obviated heretofore.

The first of these disadvantages is that the shaped plate tends to be readily fouled and is difficult to keep clean.

In fact, during the grating action, a part of the comminuted material would go through the holes inside the annular protuberances, but a not negligible part thereof would nest in the lands between annular protuberances whereat the shaped plate is not apertured.

The deposit gradually builds up and becomes compacted under the pressure exerted in grating, with the result that, at the end of the grating operation, the shaped plate is practically covered with grated material.

Thus, cleaning the shaped plate becomes a difficult and laborious task, also because the tips of a fork or the like instrument are generally used for the purpose.

The situation cannot be improved through such obvious approaches as an increase in the number of the shaped plate throughgoing holes and the provision of highly polished lands between the annular protuberances.

Increasing the number of holes, on the one side, would weaken the shaped plate, while on the other side, would make the interstices between the holes more difficult to reach. On the other hand, a highly polished plate would not ensure that the grated material slides off owing to the unavoidable presence of the jagged annular protuberances preventing the material from sliding off completely.

Another shortcoming of household graters having the above construction is that they may represent a significant hazard for the user, since the user's hands can easily contact the jagged annular protuberances, which are highly abrasive.

In view of the foregoing situation, it is a general object of this invention to provide a novel grater structure for household application, which can substantially obviate such prior deficiencies.

It is a further object of this invention to provide a grater structure which can substantially retain the simple construction features of currently available graters.

This grater structure, moreover, may be readily implemented also by modifying currently existing graters.

These and other objects, such as will be apparent hereinafter, are achieved by a grater structure for household application, according to the invention, which comprises a shaped plate formed with a plurality of annular protuberances bordering throughgoing holes, and a means of positioning and supporting said shaped plate.

This grater is characterized in that it comprises a smooth plate, substantially mating with said shaped plate and having a plurality of holes so located and sized as to permit said annular protuberances to penetrate said holes, a means of releasable engagement being provided between said smooth plate and shaped plate.

Further features and advantages of this invention will become more readily apparent by making reference to the following description of a preferred embodiment of this grater structure, as illustrated by way of example only in the accompanying drawings, where:

Figure 1 is a partly sectional, side elevation view of a grater according to the invention;

Figure 2 is an enlarged scale detail view of Figure 1; and

Figure 3 is a general, essentially diagramatic, perspective view of the grater structure shown in the preceding figures.

Making reference to the drawing figures, the grater structure of this invention is generally designated with the reference numeral 1.

It comprises, in a manner known per se, a shaped plate 2 having a substantially rectangular outline and being perforated with plural throughgoing holes 3.

The shaped plate 2 has a working face 2a from which preferably frusto-conical and jagged annular protuberances 4 stand out which border the throughgoing holes 3.

Between annular protuberances 4, the shaped plate 2 is substantially smooth, even at its working face 2a.

Also in a manner known per se, there is provided a means of positioning and supporting the shaped plate 2, which comprises in this specific instance a frame 5 pivoted, as by means of pins 6, to the shaped plate 2, and a handle 7 formed at the top end of the plate 2.

The pins 6 are located adjacent the handle 7 to enable an oblique setting of the grater with the handle 7 raised.

Advantageously, and as shown throughout the drawing figures, the shaped plate 2 is associated with a smooth plate 8 having an edge outline which is substantially similar to that of said shaped plate,
albeit of a smaller size.

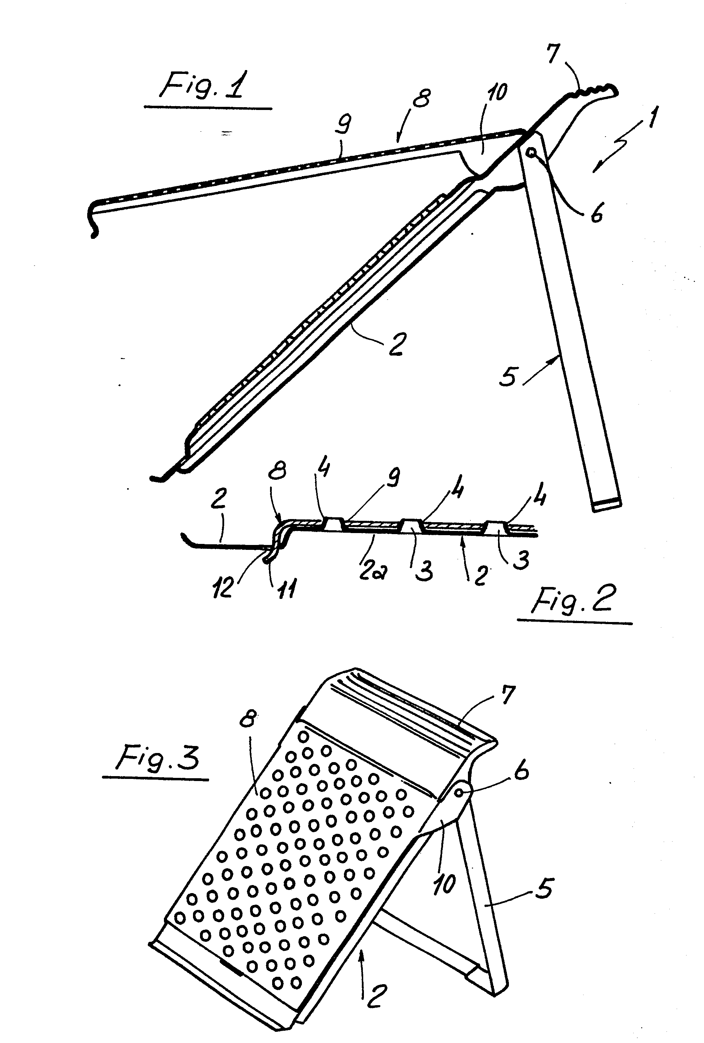

The smooth plate 8 is formed with a plurality
of holes 9 located in alignment with the throughgoing
holes 3 in the shaped plate 2 and sized to enable
the annular protuberances 4 to penetrate them, as
shown in Figure 2.

The smooth plate 8 is substantially thin,
thereby the annular protuberances 4 are allowed to
protrude at least partially through the holes 9 with
the smooth plate 8 laid onto the shaped plate 2.

It is advantageously contemplated that the
smooth plate 8 be pivotally engaged with the shaped
plate 2.

Further, it is contemplated that said pivotal
engagement be provided at the pins 6, which connect
the shaped plate 2 to the frame 5.

To this aim, the smooth plate 8 is provided with
ears 10 extending perpendicularly to the plane of lay
of the smooth plate 8.

In the exemplary embodiment shown, also included
is a releasable rabbeted locking means for
establishing a relatively stable side-by-side
relationship of the smooth plate 8 with the shaped
plate 2.

The rabbeted locking means is defined by a lug
11 extending from the edge of the smooth plate 8
remote from the ears 10 and being press fitted into
a corresponding seat 12 formed under the shaped plate
2.

The mode of operation of the above-discussed structure is quite apparent.

The user first sets the grater 1 in the working position thereof, shown in Figure 3.

In such a condition, the frame 5 is substantially transversely located with respect to the shaped plate 2, thereby the latter is set substantially obliquely in its traditional working position.

The smooth plate 8 will be laid onto the shaped plate 2 and the annular protuberances will come out through the smooth plate so as to provide a normal abrading action.

In this condition, the user can operate the grater in a quite conventional fashion.

On completion of the grating operation, the grater 1 may be cleaned by simply raising the smooth plate 8, as shown in Figure 1, and wiping the plate, e.g. with a cloth.

Owing to the substantially smooth surface of the plate 8, any residue of the grated product can be easily and readily removed.

Thus, the invention achieves its objects.

In fact, the inventive grater can give full assurance of hygienic conditions thanks to its being easy to clean completely, without jeopardizing the traditional features of simplicity and strength of graters for household use.

Indeed, the structure provided is so simple that, in the extreme, it could be formed from a conventional grater by adding to it the smooth plate 8.

It should be noted, moreover, that the provision of the smooth plate 8 is also advantageous in that it prevents unwanted abrasion of the user's hand.

In fact, the smooth plate 8 slightly reduces the height of the annular protuberances 4, without jeopardizing their grating ability.

This because, as shown in Figure 2, the smooth plate 8 obviously tends to move away through a distance from the shaped plate 2 while the latter is not being pressed.

Lacking a grating action, therefore, the likelihood of accidentally scratching one's hands is minimized.

By contrast, during the grating action, the smooth plate 8 would be pressed against the shaped plate 2, thus making the annular protuberances 4 more prominent, and hence, their grating action more powerful.

It should be further appreciated that the type of connection provided between the shaped plate 2 makes the connection feasible without any further pins in addition to those provided for the frame 5.

Furthermore, said connection enables the smooth plate 8 to be fully tilted over the handle 7 and adjacent the frame 5.

The grater 1 may thus be used in a quite conventional style when an exceptionally powerful abrading action is required.

In practicing the invention, the materials used, and the shapes and dimensions, may be any selected

0101417

ones to meet individual requirements.

0101417

## CLAIMS

1. A grater structure for household application, comprising a shaped plate formed with a plurality of annular protuberances bordering throughgoing holes, and a means of positioning and supporting said shaped plate, characterized in that it comprises a smooth plate (8), substantially mating with said shaped plate (2) and having a plurality of holes (3) so located and sized as to permit said annular protuberances (4) to penetrate said holes (3), a means (5,6) of releasable engagement being provided between said smooth plate (8) and shaped plate (2).

2. A grater structure according to Claim 1, characterized in that said means of releasable engagement between said smooth and shaped plates comprises pins (6) adapted to enable caliper-like angular movements between said smooth plate and said shaped plate (2).

3. A grater structure according to Claim 1, characterized in that said means of positioning and supporting said shaped plate (2) comprises a frame (5) pivoted to said shaped plate (2) through the same pins (6) provided for the connection to said smooth plate (8).

4. A grater structure according to Claim 1, characterized in that said smooth plate (8) is formed, at said pins (6), with projecting ears (10) adapted to enable full tilting of said smooth plate (8).

5. A grater structure according to Claim 1, characterized in that said smooth plate (8) is engageable in rabbeted relationship with said shaped plate (2).

0101417

1/1

**Fig. 1**

**Fig. 2**

**Fig. 3**